# EUROPÄISCHE PATENTANMELDUNG

(11) **EP 2 854 212 A1**
(43) Veröffentlichungstag der Anmeldung: **01.04.2015**
(21) Anmeldenummer: 13186716.0
(22) Anmeldetag: 30.09.2013
(51) Int. Cl.: H01M 10/613, B60H 1/00, B60L 11/18, F28D 9/00, H01M 10/615, H01M 10/625, H01M 10/6556, H01M 10/6571

(54) **Heiz- und Kühlvorrichtung für eine Batterie**

(71) Anmelder: Behr France Rouffach SAS, 68250 Rouffach (FR); MAHLE Behr GmbH & Co. KG, 70469 Stuttgart (DE)
(72) Erfinder: Hirsch, Stefan, 70180 Stuttgart (DE); Miss, Pascal, 67600 Sélestat (FR); Schäfer, Bernd, 70176 Stuttgart (DE); Treier, Joachim, 77728 Oppenau (DE); Weingaertner, Stéphane, 68250 Pfaffenheim (FR)
(74) Vertreter: BRP Renaud & Partner mbB Rechtsanwälte Patentanwälte Steuerberater

(57) **Zusammenfassung**

Die Erfindung betrifft eine Heiz- und Kühlvorrichtung (1) für eine Batterie, insbesondere eines Kraftfahrzeugs,
- mit einer elektrisch leitfähigen Bodenplatte (2) zur thermischen Ankopplung an die Batterie, wobei in der Bodenplatte (2) wenigstens ein Fluidpfad (6) zum Durchströmen mit einem Kühlmittel, mittels welchem die Batterie kühlbar ist, vorgesehen ist,
- mit eine Trägerplatte (2) aus einem elektrisch nicht-leitenden Material, in welche wenigstens ein elektrisch mit der elektrisch leitfähigen Bodenplatte (2) verbundenes elektrisches Heizelement (4) eingesetzt ist,
- mit einer elektrisch leitfähigen Abdeckplatte (5), die elektrisch mit dem elektrischen Heizelement (4) verbunden ist,
- wobei die Bodenplatte (2), die Trägerplatte (3) und die Abdeckplatte (5) entlang einer Stapelrichtung (S) aufeinander gestapelt sind.

## Beschreibung

Die vorliegende Erfindung betrifft eine Heiz- und Kühlvorrichtung für eine Batterie sowie eine Batterieanordnung mit einer solchen Heiz- und Kühlvorrichtung. Die Erfindung betrifft ferner ein Kraftfahrzeug mit einer solchen Batterieanordnung.

Wiederaufladbare Batteriesysteme für Elektrofahrzeuge mit rein elektrischem Antrieb sowie für Hybridfahrzeuge und Fahrzeuge mit Brennstoffzellenantrieb sind Gegenstand aktueller Forschung. Gegenwärtig werden in den genannten Fahrzeuggattungen bevorzugt Lithium-lonen-Batterien eingesetzt, welche sich durch eine hohe Energiedichte und einen nur schwach ausgeprägten, unerwünschten Memory-Effekt auszeichnen. Die Fähigkeit einer wiederaufladbaren Batterie, verschiedene in Kraftfahrzeugen verbaute elektrische Verbraucher zuverlässig mit elektrischer Energie zu versorgen, hängt in erheblichem Maße von den in der Umgebung der Batterie herrschenden thermischen Bedingungen ab. Denn sowohl die beim Bereitstellen als auch bei der Aufnahme von elektrischer Energie - im Sinne eines Wiederaufladens - in der Batterie ablaufenden elektrochemischen Prozesse sind in nicht unerheblichem Maße von der Betriebstemperatur der Batterie abhängig. Umfangreiche Untersuchungen an verschiedenen Batteriesystemen auf Lithium-lonen-Basis haben etwa gezeigt, dass unterhalb einer kritischen Temperatur, etwa im Bereich von ca. 0°C, die von der Batterie zur Verfügung gestellte elektrische Energiedichte im Vergleich zu höheren Betriebstemperaturen stark abnimmt. Unterhalb der kritischen Temperatur kann es zudem beim Laden zu einer Schädigung der Li-lonen-Zelle kommen.

Entscheidend für einen zuverlässigen und störungsfreien Betrieb besagter Batterien - dies gilt nicht nur für genannte Batterien auf Lithium-lonen-Basis, sondern generell für beliebige wiederaufladbare Batteriesysteme - ist demzufolge die Schaffung thermisch wohldefinierter Umgebungsbedingungen. Dies bedeutet im Hinblick auf die etwa in einem Kraftfahrzeug betriebsmäßig auftretenden, erheblichen Temperaturschwankungen, dass diese durch geeignete, thermisch mit der Batterie gekoppelte Temperiervorrichtungen ausgeglichen werden müssen, um die Umgebungstemperatur der Batterie und somit auch die Temperatur der Batterie selbst innerhalb eines vorgegebenen Temperaturintervalls zu halten. Eine solche Vorrichtung muss einerseits in der Lage sein, die Umgebungstemperatur in der unmittelbaren Umgebung der Batterie zu erhöhen, falls diese einen Wert annimmt, der unterhalb des zulässigen Temperaturbereichs liegt. Andererseits muss auch die Möglichkeit gegeben sein, die Umgebungstemperatur abzusenken, falls diese besagtes Temperaturintervall nach oben überschreitet.

Aus dem Stand der Technik bekannt sind verschiedene, mit einer Batterie thermisch koppelbare Vorrichtungen, welche in der Regel sowohl eine Heizeinheit zum Erhöhen der Batterietemperatur als auch ein Kühlsystem zum Absenken der Batterietemperatur umfassen.

So ist in der DE 10 2009 90 588 19 A1 eine Vorrichtung zum Heizen und Kühlen einer Batterie beschrieben, welche einen Kühlmittelkreislauf und wenigstens ein elektrisches Heizelement aufweist, welche beide in einem gemeinsamen Wärmeübertragungsbauteil angeordnet sind. Das elektrische Heizelement ist dabei form- und/oder kraftschlüssig mit dem Wärmeübertragungsbauteil verbunden. Charakteristisch für die Vorrichtung ist, dass sie eine relativ große Anzahl von Bauelementen bedingt, welche bei einem Heizvorgang konstruktionsbedingt vom Heizelement mitaufgeheizt werden, was die zum eigentlich angestrebten Erwärmen der Batterie erforderliche Heizleistung deutlich erhöht.

Der Erfindung liegt daher die Aufgabe zugrunde, eine Heiz- und Kühlvorrichtung für eine Batterie zu schaffen, die sich durch effektive thermische Kopplung mit der zu heizenden bzw. zu kühlenden Batterie auszeichnet und sich gleichzeitig durch einen einfachen konstruktiven Aufbau mit einer geringen Anzahl an Bauteilen auszeichnet. Die Erfindung hat ferner die Aufgabe, eine Batterieanordnung mit einer zu temperierenden Batterie um eine solche Heiz- und Kühlvorrichtung zu erweitern. Schließlich hat die Erfindung die Aufgabe, ein Kraftfahrzeug mit einer solchen Batterieanordnung anzugeben.

Die genannten Aufgaben werden erfindungsgemäß durch den Gegenstand der unabhängigen Patentansprüche gelöst. Bevorzugte Ausführungsformen sind Gegenstand der abhängigen Ansprüche.

Grundgedanke der Erfindung ist demnach, eine Heiz- und Kühlvorrichtung für eine Batterie plattenartig mit einer Bodenplatte, einer Trägerplatte und einer Abdeckplatte auszubilden, welche entlang einer Stapelrichtung aufeinandergestapelt sind. Zwischen Bodenplatte und Abdeckplatte sind sowohl Heiz- als auch Kühlelemente zum Beheizen bzw. Kühlen einer thermisch an die Bodenplatte angekoppelten Batterie vorgesehen. So ist etwa sich der zur kühlmittel-gestützten Kühlung der Batterie erforderliche Fluidpfad in der Bodenplatte selbst vorgesehen, wohingegen die zum Heizen der Batterie erforderlichen elektrischen Heizelemente in die sandwichartig zwischen Bodenplatte und Abdeckplatte angeordnete Trägerplatte eingesetzt sind. Ein derartiger konstruktiver Ansatz gestattet es, den für die erfindungsgemäße Heiz- und Kühlvorrichtung erforderliche Bauraum gegenüber herkömmlichen Heiz- und Kühlvorrichtungen gering zu halten.

Die zu temperierende Batterie kann an einer von der Trägerplatte abgewandten Seite der Bodenplatte zur Anlage gebracht werden und wird auf diese Weise thermisch sowohl an die den Fluidpfad bereitstellende Bodenplatte als auch an die in die Trägerplatte eingesetzten elektrischen Heizelement angekoppelt. Die stapelartige Anordnung der plattenartig, also flächig ausgebildeten Hauptkomponenten der Heiz- und Kühlvorrichtung ermöglicht dabei eine hochwirksame thermische Anbindung der zu temperierenden Batterie.

Erfindungswesentlich ist darüber hinaus auch die jeweils elektrisch leitende Ausbildung von Bodenplatte und Abdeckplatte, welche eine technisch einfache elektrische Verbindung der elektrischen Heizelemente mit einer externen Batterie ermöglicht. Voraussetzung dafür ist eine konstruktive Gestaltung der Ober- und Unterseite der elektrischen Heizelemente dahingehend, dass diese wenigstens abschnittsweise elektrisch leitend ausgebildet sind, so dass diese Abschnitte als elektrische Außenanschlüsse des Heizelements wirken. Die im montierten Zustand der Heiz- und Kühlvorrichtung an der Ober- und Unterseite des elektrischen Heizelements anliegende Abdeck- bzw. Bodenplatte fungiert dann in der Art einer elektrischen Verbindungsleitung zwischen elektrischem Heizelement und Batterie.

Falls die erfindungsgemäße Heiz- und Kühlvorrichtung zur Temperierung einer im Motorraum eines Kraftfahrzeugs verbauten Batterie herangezogen wird, muss diese - im Gegensatz zur Abdeckplatte - nicht notwendigerweise über eine weitere elektrische Verbindungsleitung mit der besagten externen Energieversorgungseinheit verbunden werden muss, sondern kann auf technisch elegante Weise direkt über die Fahrzeugkarosserie geerdet werden.

Als bauraumtechnisch besonders günstig erweist sich eine Ausführungsform, bei welcher auf einer der Trägerplatte zugewandten ersten Seite der Bodenplatte wenigstens ein den Fluidpfad ausbildendes und sich wenigstens abschnittsweise entlang einer Längsrichtung der Bodenplatte erstreckendes Flachrohr vorgesehen ist. Unter dem Begriff "Flachrohr" sind dabei insbesondere Fluidleitungen jedweder Art gefasst, deren Bauhöhe wesentlich geringer ist als ihre Breite. Die Höhe typischer Flachrohre beträgt höchstens ein Viertel, höchst vorzugsweise höchstens ein Zehntel ihrer Breite. Ein derart ausgebildetes Flachrohr ermöglicht einen flächigen Kontakt des das Flachrohr durchströmenden Kühlmittels mit der Bodenplatte, was sich vorteilhaft auf die Wechselwirkung zwischen Kühlmittel und Batterie auswirkt, wenn letztere auf der vom Flachrohr abgewandten Seite der Bodenplatte angebracht wird.

Eine besonders homogene Kühlung der gesamten Kühlplatte lässt sich indes erzielen, indem nicht nur ein einziges, sondern wenigstens zwei, vorzugsweise vier, Flachrohre auf der Kühlplatte vorgesehen werden. Diese können etwa bezüglich einer Querrichtung der Bodenplatte im Abstand zueinander angeordnet werden. Alternativ können benachbarte Flachrohre jedoch auch unmittelbar aneinander angrenzen. In beiden Fällen kann eine flächige und somit besonders homogene Kühlung der Kühlplatte mit Kühlmittel erreicht werden.

Als fertigungstechnisch besonders vorzuziehen ist eine Ausführungsform, bei welcher die wenigstens zwei Flachrohre jeweils integral an der Bodenplatte ausgeformt sind. Alternativ dazu können die Flachrohre auch stoffschlüssig, etwa mittels Verlöten oder Verschweißen, an der Bodenplatte befestigt werden.

Um nun das elektrische Heizelement thermisch möglichst effektiv an die Bodenplatte und über diese an die zu temperierende Batterie anzukoppeln, wird gemäß einer besonders bevorzugten Ausführungsform vorgeschlagen, in der Trägerplatte wenigstens zwei Durchgangsöffnungen vorzusehen, in welche jeweils ein elektrisches Heizelement eingesetzt ist, und zwar vorzugsweise derart, dass die Heizelemente die Durchgangsöffnungen bezüglich einer Draufsicht auf die Trägerplatte möglichst vollständig ausfüllen. Die Fixierung der elektrischen Heizelemente in den Durchgangsöffnungen kann mit Hilfe einer Klebverbindung erfolgen. An dem eine jeweilige Durchgangsöffnung einfassenden Öffnungsrand können zudem ein oder mehrere nach innen in die Durchgangsöffnung abstehende Vorsprünge vorgesehen sein, welche beim Einsetzen eines elektrischen Heizelements in eine Öffnung als Anschlag wirken und einem Werker den Einsetzvorgang in nicht unerheblichem Maße zu erleichtern vermögen.

Es ist klar, dass die thermisch an die Trägerplatte gekoppelte Bodenplatte eine besonders homogene laterale Erwärmung erfahren kann, wenn in der Trägerplatte nicht nur ein einziges, sondern eine Mehrzahl von elektrischen Heizelementen vorgesehen wird. Experimentelle Untersuchungen haben nun gezeigt, dass die Bereitstellung von wenigstens vier, vorzugsweise 15, höchst vorzugsweise 20, Durchgangsöffnungen, in welche jeweils elektrische Heizelemente eingesetzt sind, im Hinblick auf die in der Bodenplatte erzielbare homogene Erwärmung im Verhältnis zu dem zur Realisierung erforderlichen konstruktiven Aufwand einen optimalen Kompromiss darstellen.

Bei einer besonders bevorzugten Ausführungsform sind die Durchgangsöffnungen der Trägerplatte in einem montierten Zustand der Heiz- und Kühlvorrichtung jeweils in Bereichen zwischen zwei benachbarten Flachrohren angeordnet.

Eine besonders homogene, laterale Erwärmung der Bodenplatte lässt sich indes erzielen, indem die wenigstens vier Heizelemente welche bezüglich einer Draufsicht auf die Trägerplatte rasterartig auf dieser angeordnet werden.

In fertigungstechnischer Hinsicht mit besonders geringem Aufwand herzustellen sind plattenartig ausgebildete elektrische Heizelemente, die bezüglich einer Draufsicht eine im Wesentlichen rechteckige Formgebung besitzen. Folglich bietet es sich an, auch die Durchgangsöffnungen bezüglich einer Draufsicht auf die Trägerplatte mit der geometrischen Formgebung eines Rechtecks zu versehen.

Der in Stapelrichtung für die Bodenplatte und die Trägerplatte erforderliche Bauraum lässt sich zusätzlich in nicht unerheblichem Maße reduzieren, indem eine der Bodenplatte zugewandte Seite der Trägerplatte mit einer Oberflächenkontur versehen wird, die im Wesentlichen komplementär zur Oberflächenkontur einer der Trägerplatte zugewandten Seite der Bodenplatte ausgebildet ist.

Besonders zweckmäßig umfasst die Trägerplatte ein Trägermaterial aus Kunststoff. Auf diese Weise wird sichergestellt, dass zwischen der elektrisch leitenden Bodenplatte und der ebenfalls elektrisch leitenden Abdeckplatte - beide Platten können für die elektrischen Heizelemente als elektrische Leitungselemente fungieren, die zur elektrischen Energieversorgung der Heizelemente an eine externe Batterie angeschlossen werden - keine unerwünschten elektrische Kurzschlussströme fließen, falls die beiden Platten mit den beiden elektrischen Polen der Batterie verbunden werden.

Zur Einleitung von Kühlmittel in den Fluidpfad der Bodenplatte empfiehlt es sich, an der Bodenplatte an einem bezügliche deren Längsrichtung ersten Endabschnitt einen gemeinsamen Kühlmitteleinlass vorzusehen, welcher sich entlang der Querrichtung der Bodenplatte erstreckt und fluidisch mit den Flachrohren verbunden ist. Entsprechend bietet es sich an, zur Ausleitung des Kühlmittels aus der Bodenplatte an einem bezüglich der Längsrichtung zweiten Endabschnitt einen gemeinsamer Kühlmittelauslass vorzusehen, welcher sich entlang der Querrichtung der Bodenplatte erstreckt und ebenfalls fluidisch mit den Flachrohren verbunden ist. Mit anderen Worten, bei der hier vorgeschlagenen Konfiguration erfolgt die Einleitung von Kühlmittel in den in der Bodenplatte vorgesehenen Fluidpfad in einem bezüglich ihrer Längsrichtung ersten Endabschnitt der Bodenplatte. Das Kühlmittel durchströmt die Bodenplatte im durch Flachrohre gebildeten Fluidpfad entlang der Längsrichtung und tritt im Bereich eines dem ersten Endabschnitt gegenüberliegenden zweiten Endabschnitts wieder aus der Bodenplatte aus.

Besonders zweckmäßig können besagter gemeinsamer Kühlmitteleinlass und Kühlmittelauslass in der Art eines Flachrohrs ausgebildet sein, welches sich im ersten bzw. zweiten Endabschnitt entlang der Querrichtung der Bodenplatte erstreckt. Für den Fall, dass der Fluidpfad durch ein oder mehrere sich entlang der Längsrichtung der Bodenplatte erstreckende Flachrohre gebildet wird, lässt sich Kühlmittel etwa durch eine Einlassöffnung in Form eines von der Bodenplatte abstehenden Rohrstutzens zunächst in den gemeinsamen Fluideinlass einleiten und anschließend auf die den Fluidpfad bildenden Flachrohre verteilen. Entsprechendes gilt mutatis mutandis für den gemeinsamen Fluidauslass und eine an diesem vorgesehene Auslassöffnung.

Fertigungstechnisch vorzuziehen ist indes eine Variante, bei welcher der Kühlmitteleinlass und/oder der Kühlmittelauslass stoffschlüssig, insbesondere mittels einer Schweiß- oder Lötverbindung, mit der Bodenplatte verbunden sind.

Bei einer bevorzugten Ausführungsform können als elektrische Heizelemente dem einschlägigen Fachmann geläufige, plattenartig ausgebildete PTC-Heizelemente verwendet werden. Die plattenartige Formgebung solcher kommerziell in großen Mengen erhältlicher Heizelemente erlaubt es, diese ohne größere konstruktive Modifikationen in der erfindungsgemäßen Heiz- und Kühlvorrichtung einzusetzen. Solche PTC-Elemente besitzen typischerweise eine Länge von ca. 35mm, eine Breite zwischen 4mm und 14mm sowie eine Höhe von bis zu 2mm.

Die Erfindung betrifft weiterhin eine Batterieanordnung für ein Kraftfahrzeug mit einer Batterie, insbesondere einer Lithium-Ionen-Batterie, sowie mit einer thermisch mit der Batterie gekoppelten Heiz- und Kühlvorrichtung mit einem oder mehreren der vorangehend genannten Merkmale. Die thermische Kopplung lässt sich dabei durch ein Befestigen der Batterie an der Heiz- und Kühlvorrichtung, etwa im Bereich der Bodenplatte, realisieren. Auch eine Befestigung im Bereich der Abdeckplatte oder seitlich an der Heiz- und Kühlvorrichtung ist vorstellbar.

Als in technischer Hinsicht besonders elegant erweist sich dabei eine Variante, bei welcher die mittels der Heiz- und Kühlvorrichtung zu heizende bzw. zu kühlende Batterie gleichzeitig als Energieversorgungseinheit zum Versorgen der elektrischen Heizelemente der Heiz- und Kühlvorrichtung mit elektrischer Energie herangezogen wird.

Die Erfindung betrifft schließlich ein Kraftfahrzeug mit einer vorangehend vorgestellten Batterieanordnung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: ein Beispiel einer erfindungsgemäßen Heiz- und Kühlvorrichtung in einer Explosionsdarstellung,
- Fig. 2: einen Ausschnitt der Heiz- und Kühlvorrichtung der Figur 1 in einem montierten Zustand in einem Längsschnitt,
- Fig. 3: die Trägerplatte der Heiz- und Kühlvorrichtung sowie deren Heizelemente in einer Explosionsdarstellung,
- Fig. 4: die Heiz- und Kühlvorrichtung der Figur 1 in einem montierten Zustand in einer perspektivischen Darstellung.

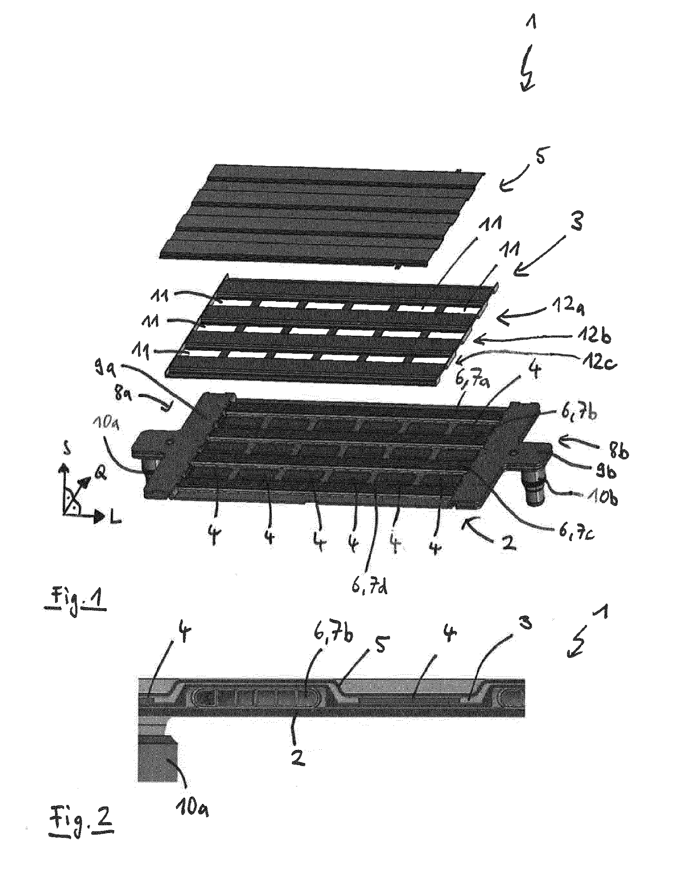

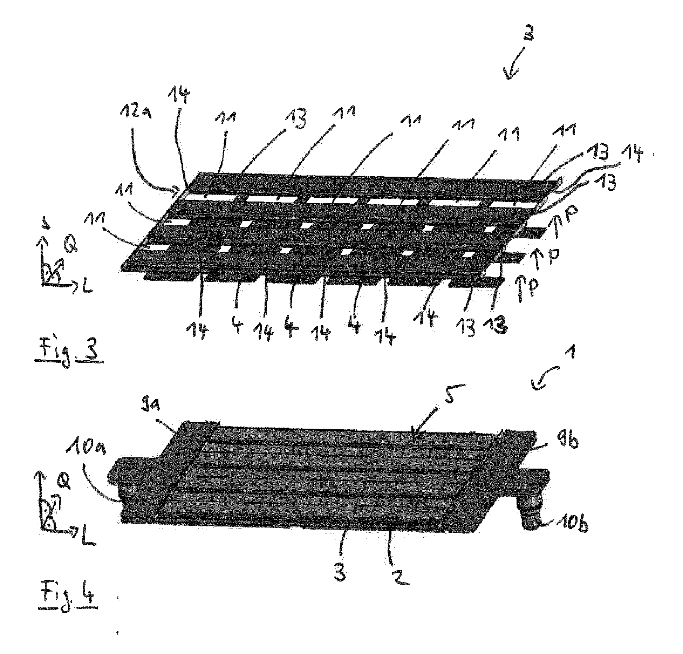

Figur 1 illustriert ein Beispiel einer erfindungsgemäßen Heiz- und Kühlvorrichtung 1 in einer Explosionsdarstellung. Die Heiz und Kühlvorrichtung 1 umfasst eine elektrisch leitfähige Bodenplatte 2, an welche durch mechanischen Kontakt eine zu temperierende Batterie thermisch angekoppelt werden kann. Ferner umfasst die Heiz- und Kühlvorrichtung 1 eine Trägerplatte 3 aus einem elektrisch nicht-leitenden Material, welche zur Aufnahme mehrerer elektrischer Heizelemente 4 dient. Die elektrischen Heizelemente 4 sind in Figur 1 der Übersichtlichkeit halber nicht in einem in der Trägerplatte 3 aufgenommenen Zustand gezeigt, sondern in ihrer endgültigen Montageposition - nach dem Zusammenbau der Heiz- und Kühlvorrichtung 1 - an der Bodenplatte 2. Demgegenüber zeigt die Figur 3 die Trägerplatte 3 mit den von ihr aufzunehmenden elektrischen Heizelementen 4 in einer Explosionsdarstellung.

Betrachtet man nun wieder die Figur 1, so erkennt man, dass die Heiz- und Kühlvorrichtung 1 auch eine elektrisch leitfähige Abdeckplatte 5 umfasst. Die Bodenplatte 2, die Trägerplatte 3 und die Abdeckplatte 5 sind in einem montierten Zustand der Heiz und Kühlvorrichtung entlang einer Stapelrichtung S aufeinandergestapelt. Zum Zwecke der Bauraumoptimierung entlang der Stapelrichtung S weist die der Bodenplatte 2 zugewandte Seite der Trägerplatte 3 eine Oberflächenkontur auf, die im Wesentlichen komplementär zu jener der der Trägerplatte 3 zugewandten Seite der Bodenplatte 2 ausgebildet ist.

In der Bodenplatte 2 ist ein Fluidpfad 6 vorgesehen, durch welchen ein Kühl- oder Kältemittel - im Folgenden der Einfachkeit halber ausschließlich als "Kühlmittel" bezeichnet -, hindurch strömen kann, so dass durch thermische Wechselwirkung des Kühlmittels mit der zu temperierenden Batterie letztere gekühlt wird. Als Kühlmittel mag etwa Wasser-Glycol verwendet werden, als Kältemittel im Fachhandel unter der Bezeichnung "134a", "R1234yf", oder "R744" erhältliche Substanzen.

Im Beispielszenario der Figur 1 besteht der Fluidpfad 6 aus vier Flachrohren 7a, 7b, 7c, 7d, welche sich entlang der Längsrichtung L der Bodenplatte im Wesentlichen parallel zueinander und entlang der Querrichtung Q der Bodenplatte 2 im Abstand zueinander auf einer der Trägerplatte 3 zugewandten Seite der Bodenplatte 2 erstrecken. Es ist klar, dass in Abwandlungen des Beispiels der Figur 1 auch eine andere Anzahl an Flachrohren 7a-7d vorgesehen sein kann. Die Flachrohre 7a-7d sind im Beispielszenario der Figur 1 jeweils integral an der Bodenplatte 2 ausgeformt. Alternativ dazu können die Flachrohre 7a-7d jedoch auch zunächst separat gefertigt und sodann stoffschlüssig, etwa mittels Verlöten oder Verschweißen, an der Bodenplatte 2 befestigt werden.

Unter dem Begriff "Flachrohr" sind dabei insbesondere Fluidleitungen gefasst, deren Höhe höchstens ein Viertel, höchst vorzugsweise höchstens ein Zehntel ihrer Breite beträgt. Derart ausgebildete Flachrohre 7a-7d ermöglichen einen flächigen Kontakt des das Flachrohr 7a-7d durchströmenden Kühlmittels mit der Bodenplatte 2, was sich vorteilhaft auf die thermische Wechselwirkung zwischen Kühlmittel und Batterie auswirkt, wenn letztere auf einer von den Flachrohren 7a-7d abgewandten Seite der Bodenplatte 2 angebracht wird.

Die Anordnung der einzelnen Flachrohre 7a-7d bezüglich der Querrichtung Q im Abstand zueinander gestattet es, den Zwischenraum zwischen zwei benachbarten Flachrohren für die Aufnahme der elektrischen Heizelemente 4 vorzusehen, was der Darstellung der Figur 1 unmittelbar entnommen werden kann. Eine solche Anordnung von elektrischen Heizelementen 4 und Flachrohren 7a-7d ermöglicht es, beide Bauteile gleichmäßig auf der Bodenplatte 2 zu verteilen, was eine homogene Temperierung der Bodenplatte 2 und somit auch der thermisch an die Bodenplatte 2 angekoppelten Batterie begünstigt.

Zur Einleitung von Kühlmittel in den Fluidpfad 6 der Bodenplatte 2 ist an der Bodenplatte 2 an einem bezügliche deren Längsrichtung L der Bodenplatte 2 ersten Endabschnitt 8a ein gemeinsamer Kühlmitteleinlass 9a vorgesehen, welcher sich entlang der Querrichtung Q der Bodenplatte 2 erstreckt und diese somit entgegen der Längsrichtung L verlängert. Der Kühlmitteleinlass 9a kann wie in Figur 1 gezeigt ebenfalls in der Art eines Flachrohrs ausgebildet sein und einen von der Bodenplatte 2 abstehenden Rohrstutzen 10a zur Einleitung von Kühlmittel in den Kühlmitteleinlass 9a aufweisen. Über den Kühlmitteleinlass 9a wird das Kühlmittel auf die einzelnen Flachrohre 7a-7d verteilt. Mit anderen Worten, der Rohrstutzen 10a kommuniziert über den Kühlmitteleinlass 9a fluidisch mit den Flachrohren 7a-7d des Fluidpfads 6.

Entsprechendes gilt nunmehr auch für die Ausleitung von Kühlmittel aus den Flachrohren 7a-7d des Fluidpfads 6: Zu diesem Zweck ist an der Bodenplatte 2 an einem bezügliche deren Längsrichtung L zweiten Endabschnitt 8b, der dem ersten Endabschnitt 8a gegenüberliegt, ein gemeinsamer Kühlmittelauslass 9b vorgesehen, welcher sich in analoger Weise zum Kühlmitteleinlass 9a ebenfalls entlang der Querrichtung Q der Bodenplatte 2 erstreckt und diese somit in Längsrichtung L verlängert. Auch der Kühlmittelauslass 9b ist in Figur 1 in der Art eines Flachrohrs ausgebildet und besitzt einen von der Bodenplatte 2 abstehenden Rohrstutzen 10b zur Ausleitung des Kühlmittels aus dem Kühlmittelauslass 9b.

Das Kühlmittel durchströmt die Bodenplatte 2 also im durch die Flachrohre 7a-7d gebildeten Fluidpfad 6 entlang der Längsrichtung L der Bodenplatte 2 und tritt in einem dem ersten Endabschnitt 8a gegenüberliegenden zweiten Endabschnitt 8b der Bodenplatte 2 wieder aus dieser aus. Sowohl der gemeinsame Kühlmitteleinlass 9a als auch der gemeinsame Kühlmittelauslass 9b können stoffschlüssig, etwa mittels einer Schweiß- oder Lötverbindung, an der Bodenplatte 2 befestigt werden.

Figur 3 zeigt wie bereits erwähnt die Trägerplatte 2 mit den in diese einsetzbaren elektrischen Heizelementen 4 in einer Explosionsdarstellung. In der Trägerplatte 3 sind achtzehn Durchgangsöffnungen 11 vorgesehen, die rasterartig - im Beispielszenario der Figur 3 mit drei Rasterzeilen 12a, 12b, 12c - angeordnet sind. Selbstverständlich ist in Varianten auch eine andere Anzahl an Durchgangsöffnungen 11 möglich. Die Durchgangsöffnungen 11 besitzen im Beispielszenario bezüglich einer Draufsicht auf die Trägerplatte im Wesentlichen die geometrische Formgebung eines Rechtecks.

Die Trägerplatte 2 mit den Durchgangsöffnungen 11 kann durch eine entsprechende Anzahl von entlang der Längsrichtung L angeordneten Längsstreben 12 realisiert werden, welche wiederum durch entlang der Querrichtung Q, also orthogonal zur Längsrichtung L, angeordnete Querstreben miteinander verbunden sind. Im Beispiel der Figuren 1 und 3 sind vier Längsstreben 12 und sieben Querstreben 13 erforderlich, um die gewünschten achtzehn Durchgangsöffnungen bereitzustellen.

In die achtzehn Durchgangsöffnungen 11 werden im Zuge des Zusammenbaus der Heiz- und Kühlvorrichtung 1 entsprechend achtzehn elektrische Heizelemente 4 eingesetzt, welche nach einem solchen Einsetzen (vgl. Pfeile P in Figur 3) folglich ebenfalls rasterartig mit drei Rasterzeilen in der Trägerplatte 3 angeordnet sind.

Die Fixierung der elektrischen Heizelemente 4 in den Durchgangsöffnungen 11 kann mittels einer stoffschlüssigen Verbindung, etwa unter Verwendung eines Klebstoffs, erfolgen. An dem eine jeweilige Durchgangsöffnung 11 einfassenden Öffnungsrand können ein oder mehrere nach innen in die Durchgangsöffnung abstehende Vorsprünge vorgesehen sein (nicht dargestellt), welche beim Einsetzen eines jeweiligen elektrischen Heizelements 4 in eine Durchgangsöffnung 11 als Anschlag wirken.

Entsprechend weisen auch die plattenartig ausgebildeten elektrischen Heizelemente 4 in der Draufsicht eine Wesentlichen rechteckige Formgebung auf, welche fertigungstechnisch besonders einfach und somit kostengünstig herzustellen ist.

Die Trägerplatte 3 mit den elektrischen Heizelementen 4 wird zum Zusammenbau der Heiz- und Kühlvorrichtung 1 auf der Bodenplatte 2 angeordnet. Durch ein Anbringen der Abdeckplatte 5 auf der Trägerplatte 3 werden die Bodenplatte 2 und die Trägerplatte 3 zur Heiz- und Kühlvorrichtung 1 komplettiert.

Die fertig montierte Heiz- und Kühlvorrichtung ist in Figur 4 in einer perspektivischen Ansicht, in der Figur 2 in einem Längsschnitt gezeigt.

Der in Stapelrichtung für die Bodenplatte 2 und die Trägerplatte 3 erforderliche Bauraum lässt sich nochmals in nicht unerheblichem Maße reduzieren, indem eine der Bodenplatte 2 zugewandte Seite der Trägerplatte 3 mit einer Oberflächenkontur versehen wird, die im Wesentlichen komplementär zur Oberflächenkontur einer der Trägerplatte 3 zugewandten Seite der Bodenplatte 22 ausgebildet ist.

Die Trägerplatte 3 weist ferner ein Trägermaterial aus einem Kunststoff auf. Auf diese Weise wird sichergestellt, dass zwischen der elektrisch leitenden Bodenplatte 2 und der ebenfalls elektrisch leitenden Abdeckplatte 5 - beide Platten 2, 3 fungieren für die elektrischen Heizelemente 4 als elektrische Leitungselemente, die zur gemeinsamen elektrischen Energieversorgung der achtzehn elektrischen Heizelemente 4 an eine externe Batterie (nicht gezeigt) angeschlossen werden können - keine elektrische Kurzschlussströme fließen können, wenn die beiden Platten 2, 5 mit den beiden elektrischen Polen der Batterie verbunden werden. Durch eine entsprechende Ausgestaltung der elektrisch leitenden Abdeckplatte 5 mit ist es möglich, einzelne oder mehrere elektrische Heizelemente 4 separat anzusteuern, wodurch sich eine besonders variable Einstellung der von den elektrischen Heizelementen 4 bereitgestellten Heizleistung realisieren lässt.

Als elektrische Heizelemente 4 können plattenartig ausgebildete PTC-Heizelemente verwendet werden. Die plattenartige Formgebung solcher kommerziell in großen Mengen erhältlicher PTC-Heizelemente erlaubt es, diese ohne größere konstruktive Modifikationen in der erfindungsgemäßen Heiz- und Kühlvorrichtung 1 einzusetzen. Solche PTC-Heizelemente besitzen typischerweise eine Länge von ca. 35mm, eine Breite zwischen 4mm und 14mm sowie eine Höhe von bis zu 2mm. Die verwendeten PTC-Heizelemente weisen den Vorteil auf, dass ihr elektrischer Widerstand mit zunehmender Temperatur ansteigt, wodurch wiederum die von ihnen erzeugte Heizleistung abnimmt, d.h. die PTC-Heizelemente arbeiten selbstregulierend. Somit ist keine separate Sensorik erforderlich, welche die elektrischen Heizelemente bei Überschreiten einer maximal zulässigen kritischen Temperatur, oberhalb derer potentiell die Gefahr einer Schädigung der zu temperierende Batterie bestünde, abschaltet.

## Patentansprüche

1. Heiz- und Kühlvorrichtung (1) für eine Batterie, insbesondere eines Kraftfahrzeugs,
- mit einer elektrisch leitfähigen Bodenplatte (2) zur thermischen Ankopplung an die Batterie, wobei in der Bodenplatte (2) wenigstens ein Fluidpfad (6) zum Durchströmen mit einem Kühlmittel, mittels welchem die Batterie kühlbar ist, vorgesehen ist,
- mit einer Trägerplatte (2) aus einem elektrisch nicht-leitenden Material, in welche wenigstens ein elektrisch mit der elektrisch leitfähigen Bodenplatte (2) verbundenes elektrisches Heizelement (4) eingesetzt ist,
- mit einer elektrisch leitfähigen Abdeckplatte (5), die elektrisch mit dem elektrischen Heizelement (4) verbunden ist,
- wobei die Bodenplatte (2), die Trägerplatte (3) und die Abdeckplatte (5) entlang einer Stapelrichtung (S) aufeinander gestapelt sind.

2. Heiz- und Kühlvorrichtung nach Anspruch 1,
**dadurch gekennzeichnet, dass**
auf einer der Trägerplatte (3) zugewandten ersten Seite der Bodenplatte (2) wenigstens ein den Fluidpfad (6) ausbildendes und sich wenigstens abschnittsweise entlang einer Längsrichtung (L) der Bodenplatte (2) erstreckendes Flachrohr (7a, 7b, 7c) vorgesehen ist.

3. Heiz- und Kühlvorrichtung nach Anspruch 2,
**dadurch gekennzeichnet, dass**
wenigstens zwei, vorzugsweise vier, Flachrohre (7a, 7b, 7c) vorgesehen sind, welche bezüglich einer Querrichtung (Q) der Bodenplatte (2) im Abstand zueinander angeordnet sind.

4. Heiz- und Kühlvorrichtung nach Anspruch 2 oder 3,
**dadurch gekennzeichnet, dass**
das wenigstens eine Flachrohr (7a, 7b, 7c) integral an der Bodenplatte (2) ausgeformt ist oder stoffschlüssig mit der Bodenplatte (2) verbunden, insbesondere an dieser angelötet oder angeschweißt, ist.

5. Heiz- und Kühlvorrichtung nach einem der vorhergehenden Ansprüche,
**dadurch gekennzeichnet, dass**
in der Trägerplatte (2) wenigstens zwei Durchgangsöffnungen (11) vorgesehen sind, in welche jeweils ein elektrisches Heizelement (4) eingesetzt ist.

6. Heiz- und Kühlvorrichtung nach einem der vorhergehenden Ansprüche,
**dadurch gekennzeichnet, dass**
in der Trägerplatte (2) wenigstens vier, vorzugsweise 15, höchst vorzugsweise 20, Durchgangsöffnungen (11) mit jeweiligen elektrischen Heizelementen (4) vorgesehen sind.

7. Heiz- und Kühlvorrichtung nach Anspruch 5 oder 6,
**dadurch gekennzeichnet, dass**
die Durchgangsöffnungen (11) der Trägerplatte (3) in einem montierten Zustand der Heiz- und Kühlvorrichtung (1) jeweils in Bereichen zwischen zwei benachbarten Flachrohren (7a, 7b, 7c) angeordnet sind.

8. Heiz- und Kühlvorrichtung nach Anspruch 6 oder 7,
**dadurch gekennzeichnet, dass**
die wenigstens vier elektrischen Heizelemente (4) bezüglich einer Draufsicht entlang der Stapelrichtung (S) auf die Trägerplatte (3) rasterartig auf dieser angeordnet sind.

9. Heiz- und Kühlvorrichtung nach einem der Ansprüche 5 bis 8,
**dadurch gekennzeichnet, dass**
die Durchgangsöffnungen (11) bezüglich der Draufsicht auf die Trägerplatte (3) im Wesentlichen die geometrische Form eines Rechtecks aufweisen.

10. Heiz- und Kühlvorrichtung nach einem der vorhergehenden Ansprüche,
**dadurch gekennzeichnet, dass**
eine der Bodenplatte (2) zugewandte Seite der Trägerplatte (3) eine Oberflächenkontur aufweist, die im Wesentlichen komplementär zur Oberflächenkontur einer der Trägerplatte (3) zugewandten Seite der Bodenplatte (2) ausgebildet ist.

11. Heiz- und Kühlvorrichtung nach einem der vorhergehenden Ansprüche
**dadurch gekennzeichnet, dass**
die Trägerplatte (3) ein Trägermaterial aus Kunststoff umfasst.

12. Heiz- und Kühlvorrichtung nach einem der Ansprüche 3 bis 11,
**dadurch gekennzeichnet, dass**
- an der Bodenplatte (2) an einem bezüglich deren Längsrichtung (L) ersten Endabschnitt (8a) ein gemeinsamer Kühlmitteleinlass (9a) vorgesehen ist, welcher sich entlang der Querrichtung (Q) der Bodenplatte (2) erstreckt und fluidisch mit den Flachrohren (7a, 7b, 7c, 7d) verbunden ist,
- an der Bodenplatte (2) an einem bezüglich deren Längsrichtung (L) zweiten Endabschnitt (8b) ein gemeinsamer Kühlmittelauslass (9b) vorgesehen ist, welcher sich entlang der Querrichtung (Q) der Bodenplatte (2) erstreckt und ebenfalls fluidisch mit den Flachrohren (7a, 7b, 7c, 7d) verbunden ist.

13. Heiz- und Kühlvorrichtung nach Anspruch 12,
**dadurch gekennzeichnet, dass**
der gemeinsame Kühlmitteleinlass (9a) und/oder der gemeinsame Kühlmittelauslass (9b) stoffschlüssig, insbesondere mittels einer Schweiß- oder Lötverbindung, mit der Bodenplatte (2) verbunden ist.

14. Heiz- und Kühlvorrichtung nach einem der vorhergehenden Ansprüche,
**dadurch gekennzeichnet, dass**
die elektrischen Heizelemente (4) jeweils als plattenartige PTC-Heizelemente ausgebildet sind.

15. Batterieanordnung für ein Kraftfahrzeug,
- mit einer Batterie, insbesondere einer Li-Ionen-Batterie,
- mit einer thermisch mit der Batterie gekoppelten Heiz- und Kühlvorrichtung (1) nach einem der vorhergehenden Ansprüche.

16. Kraftfahrzeug mit wenigstens einer Batterieanordnung nach Anspruch 15.
